# EUROPEAN PATENT APPLICATION

(11) **EP 2 249 300 A1**
(43) Date of publication of application: **10.11.2010**
(21) Application number: 10165220.4
(22) Date of filing: 08.06.2010
(51) Int. Cl.: G06Q 20/00, G06F 21/00

(54) **Method and system for providing universal access to a service amongst a plurality of services**

(71) Applicant: Pay & Save N.V., 3210 Lubbeek (BE)
(72) Inventor: Maris Johan, 3210 Lubbeek (BE); Verhetsel Dirk, 3210 Lubbeek (BE); Van Campenhout Sam, 3210 Lubbeek (BE)
(74) Representative: BiiP cvba

(57) **Abstract**

The present invention relates to a method for providing universal access to a service amongst a plurality of services comprising:
- storing a plurality of service accounts, each corresponding to a customer and a service said customer is subscribed to,
- receiving a request from a customer for using a service,
- determining a service account upon identification of such customer and the requested service or its service provider,
- consulting confidential service account content corresponding to said service account,

**characterized in that** consulting said confidential service account content comprises real-time communicating with said service provider, said service provider providing real-time access to said confidential service account content.

Additionally the present invention relates to a system for providing universal access to a service amongst a plurality of services comprising:
- a means for storing a plurality of service accounts, each corresponding to a customer and a service said customer is subscribed to,
- a determination means for determining a service account upon identification of such customer and the requested service or its service provider,
- a consulting means for consulting confidential service account content corresponding to said service account,

**characterized in that** said consulting means is adapted to communicate real-time with said service provider, said service provider providing real-time access to said confidential service account content.

## Description

### FIELD OF THE INVENTION

The present invention relates to a method and system for providing universal access to a service amongst a plurality of services.

### BACKGROUND OF THE INVENTION

Currently, customers collect a large number of loyalty cards, bank cards, credit cards, badges, and other identification instruments associated with all kinds of services they are subscribed to such as bank accounts, loyalty program accounts, etc.

A known general problem is that it is difficult to maintain such large number of cards and either to continuously carry them all in a handbag or a wallet, either to make sure having the correct valid card available upon using a service or visiting a store or a bank.

In an attempt to overcome the above problem, US 2010/0042517 describes a method for providing universal access to loyalty program accounts and/or financial accounts. Further, the patent application describes a uniform loyalty program account device to access a plurality of loyalty accounts and/or financial accounts. The device includes a storage mechanism configured to store account information for loyalty program accounts and/or financial accounts.

However, a disadvantage of the above method and device is that the collection of service accounts and corresponding account information is stored on a central server, which consequently implicates that the service provider has to share confidential service account content with the universal access system. Most service providers are not keen to do so for privacy and security reasons.

Another disadvantage of the above method and device is that service account content has to be duplicated in the universal access system database from the service provider's database, which in fact means a waste of memory space.

A further disadvantage is that, since duplication of the service account content is performed with a certain frequency, provisions have to be made to avoid situations wherein a customer intends to use a service of which the service account content is not yet up-to-date.

Still another disadvantage of known methods and systems is that a dedicated universal identification instrument, e.g. a dedicated ID card, has to be released which the customer needs to have with him every time he wants to make use of a service.

Considering the above, as a first object the present invention provides a method and system for providing universal access to a service amongst a plurality of services, wherein confidential service account content does not need to be shared with the universal access system, resulting in less or even minimized privacy and security problems.

It is another object of the present invention to provide a method and system for providing universal access to a service amongst a plurality of services, wherein service account content does not need to be duplicated such that memory space is saved.

Further it is an object of the present invention to provide a method and system for providing universal access to a service amongst a plurality of services, having the ability to deliver the customer and the service provider up-to-date service account content.

Another object of the present invention is to provide a method and system where no additional dedicated universal identification instrument has to be released and where a customer is not dependent on carrying that dedicated universal identification instrument with him every time he wants to make use of a service.

An additional object of the present invention is to provide a method and system for providing universal access to a service amongst a plurality of services, allowing easy implementation of business intelligence applications.

The present invention meets the above objects by consulting confidential service account content via real-time communication with the service provider, wherein the service provider provides real-time access to said confidential service account content.

### SUMMARY OF THE INVENTION

The present invention is directed to a method for providing universal access to a service amongst a plurality of services comprising:
- storing a plurality of service accounts, each corresponding to a customer and a service said customer is subscribed to,
- receiving a request from a customer for using a service,
- determining a service account upon identification of such customer and the requested service or its service provider,
- consulting confidential service account content corresponding to said service account,
**characterized in that** consulting said confidential service account content comprises real-time communicating with said service provider, said service provider providing real-time access to said confidential service account content.

Additionally the present invention is directed to a system for providing universal access to a service amongst a plurality of services comprising:
- a means for storing a plurality of service accounts, each corresponding to a customer and a service said customer is subscribed to,
- a determination means for determining a service account upon identification of such customer and the requested service or its service provider,
- a consulting means for consulting confidential service account content corresponding to said service account,
**characterized in that** said consulting means is adapted to communicate real-time with said service provider, said service provider providing real-time access to said confidential service account content.

### BRIEF DESCRIPTION OF THE DRAWINGS

FIG 1 illustrates an embodiment of a method and system in accordance with the present invention.
FIG 2 illustrates another embodiment of a method and system in accordance with the present invention.

### DESCRIPTION OF THE INVENTION

In the context of the present invention, the service amongst a plurality of services may be any kind of service where customers may be subscribed to such as banking services, loyalty programs, warranty services, rental services, pre-payment services, coupon services, ticketing services, health care services, governmental services, etc.

Further in the context of the present invention, a customer is to be understood as not only an individual, but also as a group of people, such as a family, a club, a society, a company, etc. intending to make use of a service as described above.

Further, a service provider has to be understood as a supplier providing a service as described above.

In the context of the present invention, confidential service account content is to be understood as any content of a service account which may not be disclosed without authorization from the customer, the service provider, the government, etc. for reasons of privacy, security, or any other reason.

According to a first embodiment of the present invention, a method is provided for providing universal access to a service amongst a plurality of services comprising:
- storing a plurality of service accounts, each corresponding to a customer and a service said customer is subscribed to,
- receiving a request from a customer for using a service,
- determining a service account upon identification of such customer and the requested service or its service provider,
- consulting confidential service account content corresponding to said service account,
**characterized in that** consulting said confidential service account content comprises real-time communicating with said service provider, said service provider providing real-time access to said confidential service account content.

A first advantage of consulting the confidential service account content in real-time communication with the service provider, wherein the service provider allows real-time access to the confidential service account content, is that confidential service account content does not need to be shared with or stored in the service account database. Only information needed for identification of the customer and the requested service or its service provider, is stored in the service account database such that privacy and security problems may be decreased or even minimized.

Another advantage is that service account content does not need to be duplicated from the service provider's database such that memory space may be saved.

A further advantage is that due to the real-time communication and real-time access, such method may have the ability to deliver the customer and the service provider up-to-date service account content.

In an embodiment of the present invention, identification of the customer may comprise hashing a customer's identification code from any available identification instrument such as a chip card, a magnetic strip card, an RFID card, an RFID tag, a telephone, a mobile phone, a Bluetooth device, a barcode, a Media Access Control (MAC) address, and the like. Used hash algorithms may be any algorithm used in the state of the art for encryption of identification codes.

The advantage of hashing a customer's identification code from any available identification instrument is that no additional dedicated universal identification instrument has to be released and that a customer is not dependent on carrying that dedicated universal identification instrument with him every time he wants to make use of a service. A customer may be able to identify himself by an identification instrument of his choice, since only one identification code, in combination with the requested service or its service provider, is required for determination of the service account. Further, by linking his identification code to a number of identification instruments of his choice, it is sufficient that the customer has only one of these instruments available at the moment he intends to use a service.

A method in accordance with the present invention may further comprise associating said confidential service account content with another service account of said customer, such as a financial account. For example, upon consulting confidential service account information, a customer's financial account may be debited or credited to a more or less extend depending on that information.

In an embodiment in accordance with the present invention, the method may further comprise transmitting new confidential service account content to said service provider. When using a service by a customer, new confidential service account content may be generated which may be transmitted to the corresponding service provider, preferably on a real-time basis.

Additionally, in accordance with the present invention a system is provided for providing universal access to a service amongst a plurality of services comprising:
- a means for storing a plurality of service accounts, each corresponding to a customer and a service said customer is subscribed to,
- a determination means for determining a service account upon identification of such customer and the requested service or its service provider,
- a consulting means for consulting confidential service account content corresponding to said service account,
**characterized in that** said consulting means is adapted to communicate real-time with said service provider, said service provider providing real-time access to said confidential service account content.

A system in accordance with the present invention may further comprise an identification means for identifying said customer. Such identification means may comprise any kind of tool to read a customer's identification code from any identification instrument such as a chip card, a magnetic strip card, an RFID card, an RFID tag, a telephone, a mobile phone, a Bluetooth device, a barcode, a MAC-address, and the like. In particular, such identification means may be a service provider terminal connected to the provider's point-of-sale (POS), a chip card reader, a magnetic stripe card reader, a bar code reader, a Bluetooth receiver, and the like.

The means for storing a plurality of service accounts (also called the service account database) and the consulting means may be hosted on a server, a web server, or a server in the cloud.

The determination means may be hosted on the server, the web server, the server in the cloud, or partially on the server or web server or server in the cloud and partially on the POS.

Besides the general advantage that a method and system in accordance with the present invention do not require anymore a specific identification instrument for each service account, even a dedicated identification instrument collecting a customer's identification codes for each service account he is subscribed to is not required. A customer may be able to identify himself by an identification instrument of his choice, since only one identification code, in combination with the requested service or its service provider, is required for determination of the service account. Further, by linking his identification code to a number of identification instruments of his choice, it is sufficient that the customer has only one of these instruments available at the moment he intends to use a service.

Further, a method and system according to the present invention may provide one or a combination of functionalities such as business intelligence, segmented communication based on customer profiling, mystery shopping.

Further, in case the customer is a group of people, a number of customer identification codes belonging to the members of such group may be linked to the same service account. For example, employees employed in a company subscribed to a store's loyalty program, may be linked to the same loyalty program account, upon identifying themselves as individual person in such store.

### EXAMPLE:

A consumer links the services he is subscribed to to his bank card of which the hash is stored in the service account database (SAD).

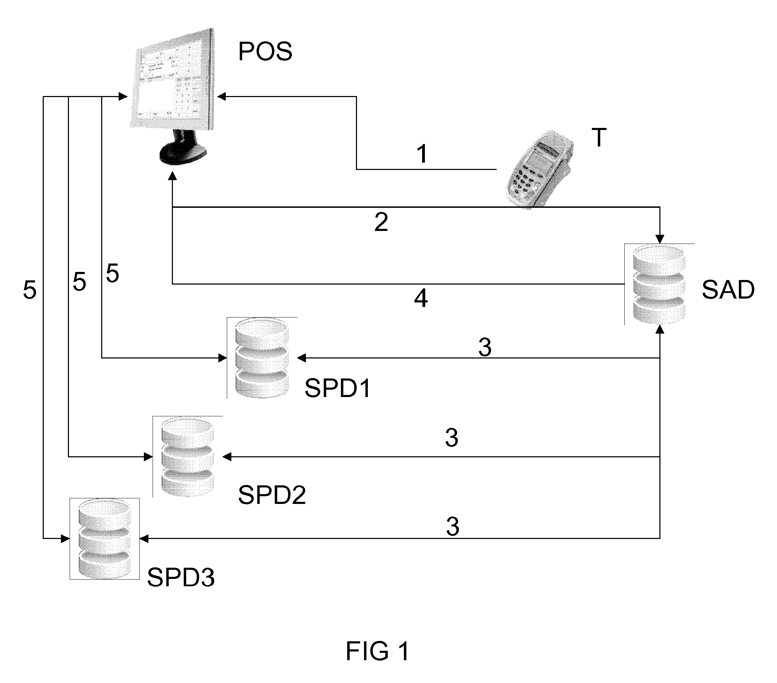

When the customer is at a service provider's premises, he identifies himself by means of his bank card. As illustrated in FIG 1, the identification program on the service provider's point-of-sale (POS) or the bank card terminal (T) connected to it hashes the card (arrow 1) and queries the SAD (arrow 2). The determination program on the SAD recognizes the hash, and responds the corresponding service account in de SAD based on the identity of the customer and the origin of the query (arrow 2)

The SAD connects in real-time to the service provider's database (SPD1, 2, 3) and queries the confidential service account content it needs (arrow 3). The SAD provides the confidential service account content to the POS (arrow 4) and may visualize it via a visualization system on the POS (not shown). The POS settles and concludes the service with the corresponding SPD (arrow 5).

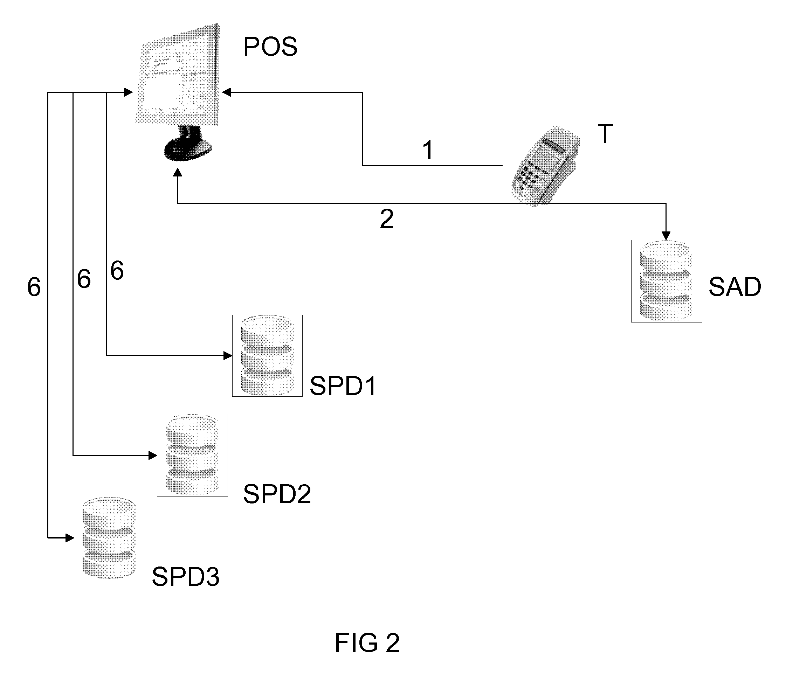

Alternatively and as shown in FIG 2, upon receiving the corresponding service account (arrow 2), the POS directly queries the service provider's database (SPD1, 2, 3) for the confidential service account content it needs, settles and concludes the service with the corresponding SPD (arrow 6).

Via his computer or mobile phone, a customer can consult a website linked to the SAD. The customer logs in and the SAD connects in real-time to the SPD's the customer is subscribed to and queries the confidential service account content, such that the customer is informed about the actual status of his services.

## Claims

1. A method for providing universal access to a service amongst a plurality of services comprising:
- storing a plurality of service accounts, each corresponding to a customer and a service said customer is subscribed to,
- receiving a request from a customer for using a service,
- determining a service account upon identification of such customer and the requested service or its service provider,
- consulting confidential service account content corresponding to said service account,
**characterized in that** consulting said confidential service account content comprises real-time communicating with said service provider, said service provider providing real-time access to said confidential service account content.

2. A method for providing universal access to a service amongst a plurality of services according to claim 1, wherein identification of said customer comprises hashing a chip card, a magnetic strip card, an RFID card, an RFID tag, a telephone, a mobile phone, a Bluetooth device, a barcode, a MAC-address, and the like.

3. A method for providing universal access to a service amongst a plurality of services according to claims 1 to 2, further comprising associating said confidential service account content with a said customer's financial account.

4. A method for providing universal access to a service amongst a plurality of services according to claims 1 to 3, wherein said service is a banking service, a loyalty program, a warranty service, a rental service, a pre-payment service, a coupon service, a ticketing service, a health care service, a governmental service and the like.

5. A method for providing universal access to a service amongst a plurality of services according to claims 1 to 4, further comprising transmitting new confidential service account content to said service provider.

6. A system for providing universal access to a service amongst a plurality of services comprising:
- a means for storing a plurality of service accounts, each corresponding to a customer and a service said customer is subscribed to,
- a determination means for determining a service account upon identification of such customer and the requested service or its service provider,
- a consulting means for consulting confidential service account content corresponding to said service account,
**characterized in that** said consulting means is adapted to communicate real-time with said service provider, said service provider providing real-time access to said confidential service account content.

7. A system for providing universal access to a service amongst a plurality of services according to claim 6, further comprising an identification means for identifying said customer.

8. A system for providing universal access to services according to claim 7, wherein said identification means comprises any kind of tool to read a customer's identification code from any identification instrument such as a chip card, a magnetic strip card, an RFID card, an RFID tag, a telephone, a mobile phone, a Bluetooth device, a barcode, a MAC-address, and the like.

9. A system for providing universal access to a service amongst a plurality of services according to claims 6 to 8, wherein said service is a banking service, a loyalty program, a warranty service, a rental service, a pre-payment service, a coupon service, a ticketing service, a health care service, a governmental service, and the like.
